(19) Europäisches Patentamt
European Patent Office
Office européen des brevets

(11) EP 0 494 988 B1

(12) # EUROPÄISCHE PATENTSCHRIFT

(45) Veröffentlichungstag und Bekanntmachung des Hinweises auf die Patenterteilung:
**28.01.1998 Patentblatt 1998/05**

(21) Anmeldenummer: **90916262.0**

(22) Anmeldetag: **01.10.1990**

(51) Int. Cl.⁶: **A01N 47/36**, A01N 43/42, A01N 47/16, A01N 47/12, A01N 37/22, A01N 43/40, A01N 43/78

(86) Internationale Anmeldenummer:
**PCT/EP90/01648**

(87) Internationale Veröffentlichungsnummer:
**WO 91/04666 (18.04.1991 Gazette 1991/09)**

(54) **SYNERGISTISCHE HERBIZIDE MITTEL**
SYNERGISTIC HERBICIDES
HERBICIDES SYNERGISTIQUES

(84) Benannte Vertragsstaaten:
**ES IT**

(30) Priorität: **07.10.1989 DE 3933543**

(43) Veröffentlichungstag der Anmeldung:
**22.07.1992 Patentblatt 1992/30**

(60) Teilanmeldung:
**97112401.1 / 0 818 146**
**97112398.9 / 0 809 938**

(73) Patentinhaber:
**Hoechst Schering AgrEvo GmbH**
**13342 Berlin (DE)**

(72) Erfinder:
- **BAUER, Klaus**
  **D-6450 Hanau (DE)**
- **BIERINGER, Hermann**
  **D-6239 Eppstein (DE)**
- **HACKER, Erwin**
  **D-6203 Hochheim am Main (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:

| | |
|---|---|
| **EP-A- 0 298 901** | **EP-A- 0 303 383** |
| **WO-A-89/01289** | **DE-A- 3 108 873** |
| **FR-A- 2 609 372** | **US-A- 4 420 325** |

- **Patent Abstracts of Japan, Band 11, Nr 80, C409, Zusammenfassung von JP 61- 233605, publ 1986-10-17**
- **Patent Abstracts of Japan, Band 10, Nr 339, C385, Zusammenfassung von JP 61- 143308, publ 1986-07-01**
- **Chemical Abstracts, Band 101, no. 11, 10 September 1984, (Columbus, Ohio, US), siehe Seite 216, Zusammenfassung 85693e, & JP,, 5982307 ((du Pont de Nemours, E.I., and Co.)) 1984**
- **Chemical Abstracts, Band 101, no. 11, 10 September 1984, (Columbus, Ohio, US), siehe Seite 216, Zusammenfassung 85694f, & JP,, 5982306 ((du Pont de Nemours, E.I., and Co.)) 1984**
- **Patent Abstracts of Japan, Band 12, Nr 186, C500, Zusammenfassung von JP 62- 292708, publ 1987-12-19**
- **Patent Abstracts of Japan, Band 12, Nr 198, C502, Zusammenfassung von JP 62-2985505**
- **Patent Abstracts of Japan, Band 11, Nr 290, C447, Zusammenfassung von JP 62- 84004, publ 1987-04-17**
- **Patent Abstracts of Japan, Band 10, Nr 144, C349, Zusammenfassung von JP 61- 5004, publ 1986-01-10**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 494 988 B1

- **Patent Abstracts of Japan, Band 8, Nr 19, C207, Zusammenfassung von JP 58- 185505, publ 1983-10-29**
- **Patent Abstracts of Japan, Band 8, Nr 19, C207, Zusammenfassung von JP 58- 185507, publ 1983-10-29**

Bemerkungen:

Teilanmeldung 97112398.9 eingereicht am 19/07/97.

## Beschreibung

Die Erfindung liegt auf dem Gebiet der Pflanzenschutzmittel, die gegen monokotyle und dikotyle Unkräuter eingesetzt werden können.

In den deutschen Patentanmeldungen P 38 16 704.2 (EP-A-0342569), P 38 16 703.4 (EP-A-0342568) und P 39 09 053.1 (EP-A-0388771) werden heterocyclisch substituierte Phenoxysulfonylharnstoffe beschrieben, mit denen ein breites Spektrum mono- und dikotyler Unkräuter bekämpft werden kann. Sie können sowohl als Bodenherbizid als auch übers Blatt eingesetzt werden und zeigen besonders auch hohe Selektivität in monokotylen Kulturpflanzen wie Getreide, Mais, Reis und Sorghum. Herbizide Mischungen von N-Benzylsulphonylharnstoffen und Thiolcarbamaten wurden in CA, Vol. 101, Nr. 85693e und Nr. 85694f und in JP-A-62-298505 beschrieben

Sowohl im Getreide als auch im Mais und Reis existieren jedoch eine Reihe wirtschaftlich sehr wichtiger monokotyler Unkräuter wie z. B. Alopecurus myosuroides, Avena fatua, Echinochloa crus galli oder Setaria viridis, die mit den erwähnten Verbindungen alleine nicht in optimaler Weise zu bekämpfen sind.

Überraschenderweise wurden nun in biologischen Versuchen einige herbizide Wirkstoffe gefunden, die bei gemeinsamer Anwendung mit den obengenannten Verbindungen ausgesprochen synergistische Eigenschaften hinsichtlich der Effektivität gegen Unkräuter haben.

Gegenstand der vorliegenden Erfindung sind herbizide Mittel, gekennzeichnet durch einen synergistisch wirksamen Gehalt an

A) Verbindungen der allgemeinen Formel (I) oder deren Salze

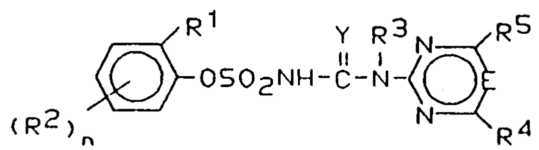

(I)

worin

$a_1$)

$R^1$ Ethoxy, Propoxy oder Isopropoxy und
$R^2$ Halogen, $NO_2$, $CF_3$, CN, $C_1$-$C_4$-Alkyl, $C_1$-$C_4$-Alkoxy, $C_1$-$C_4$-Alkylthio oder ($C_1$-$C_4$-Alkoxy)-carbonyl und
n 0, 1, 2 oder 3 oder

$a_2$)

$R^1$ gegebenenfalls ungesättigtes $C_1$-$C_8$-Alkoxy, das substituiert ist durch Halogen, gegebenenfalls ungesättigtes $C_1$-$C_6$-Alkoxy, einen Rest der Formel ($C_1$-$C_6$-Alkyl)-S-, ($C_1$-$C_6$-Alkyl)-SO-, ($C_1$-$C_6$-Alkyl)-$SO_2$-, ($C_1$-$C_6$-Alkyl)-O-CO-, $NO_2$, CN oder Phenyl; ferner $C_2$-$C_8$-Alkenyloxy oder -Alkinyloxy und
$R^2$ gesättigtes oder ungesättigtes $C_1$-$C_8$-Alkyl, Phenyl, Phenoxy, $C_1$-$C_4$-Alkoxy, $C_1$-$C_4$-Alkylthio, ($C_1$-$C_4$-Alkoxy)-carbonyl, wobei alle vorstehenden Reste für $R^2$ durch Halogen, $C_1$-$C_4$-Alkoxy oder $C_1$-$C_4$-Alkylthio substituiert sein können, oder Halogen, $NO_2$, $C_1$-$C_4$-Alkylsulfonyl oder -sulfinyl und
n 0, 1, 2 oder 3 oder

$a_3$)

$R^1$ $C_1$-$C_8$-Alkoxy und
$R^2$ $C_2$-$C_8$-Alkenyl oder -Alkinyl, Phenyl oder Phenoxy, wobei die genannten Reste für $R^2$ unsubstituiert oder durch Halogen, $C_1$-$C_4$-Alkoxy oder -Alkylthio substituiert sind, oder $C_1$-$C_4$-Alkylsulfonyl oder -Alkylsulfinyl und
n 1, 2 oder 3 oder

$a_4$)

$R^1$ - jeweils in 2-Stellung am Phenylrest - Halogen, Methoxy, Ethyl oder Propyl,
$R^2$ ($C_1$-$C_4$-Alkoxy)-carbonyl in 6-Stellung im Phenylrest und

n 1

sowie in allen Fällen $a_1$)-$a_4$)

$R^3$ Wasserstoff, gesättigtes oder ungesättigtes $C_1$-$C_8$-Alkyl oder $C_1$-$C_4$-Alkoxy,

$R^4$, $R^5$ unabhängig voneinander Wasserstoff, Halogen, $C_1$-$C_4$-Alkyl, $C_1$-$C_4$-Alkoxy, $C_1$-$C_4$-Alkylthio, wobei die letztgenannten drei Reste unsubstituiert oder durch Halogen, $C_1$-$C_4$-Alkoxy oder $C_1$-$C_4$-Alkylthio substituiert sind,

Y O oder S und

E CH oder N

bedeuten,

in Kombination mit

B) einer oder mehreren Verbindung(en) aus der Gruppe, welche die Verbindungen

B2) N-(Ethylthio-carbonyl)-azepan,

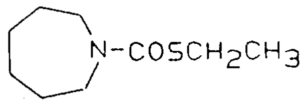

(B2)

B3) N,N-Diethyl-carbaminsäure-4-chlorbenzylthioester

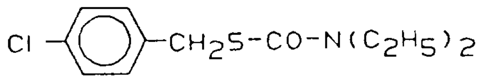

(B3)

und

B9) N-(2-Phenyl-prop-2-yl-thiocarbonyl)-piperidin

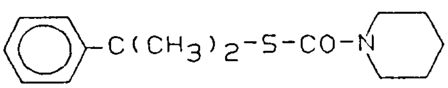

(B9)

enthält.

Die Verbindungen A (Verbindungen der Formel I) sind aus den anfangs genannten deutschen Patentanmeldungen bekannt.

Die Verbindungen B2 und B3 sind in "The Pesticide Manual", British Crop Protection Council, 8th Ed., 1987 beschrieben; siehe B2 ("Molinate") S. 578; B3 ("Thiobencarb") S. 796;

Verbindung B9 ist als selektives Herbizid in "Short Review of Herbicides 1986", 5th Edition 1985, Hodogaya Chemical Co. Ltd., Japan, Seite 108 als MY-93 Kayamate sowie in "Agricultural Chemicals Book II", Thomson Publications, USA 1989-90 als Dimepiperate oder Yukamate beschrieben.

Von besonderem Interesse sind erfindungsgemäße herbizide Mittel mit Verbindungen der genannten Formel (I) oder deren Salzen, worin

$a_1$)

$R^1$ Ethoxy, Propoxy oder Isopropoxy und
$R^2$ in Position 6 orientiert ist und die obengenannte Bedeutung hat, und
n 0 oder 1 oder

$a_2$)

$R^1$ gegebenenfalls ungesättigtes $C_1$-$C_4$-Alkoxy, das substituiert ist durch Halogen, $C_1$-$C_4$-Alkoxy, $C_1$-$C_4$-Alkylthio oder -sulfinyl oder -sulfonyl, ($C_1$-$C_4$-Alkoxy)-carbonyl, $NO_2$, CN oder Phenyl; ferner $C_2$-$C_5$-Alkenyloxy oder $C_2$-$C_4$-Alkinyloxy und
$R^2$ $C_1$-$C_4$-Alkyl, $C_2$-$C_5$-Alkenyl, ($C_1$-$C_4$-Alkoxy)-carbonyl, $C_1$-$C_4$-Alkoxy oder $C_1$-$C_4$-Alkylthio, die wie oben angegeben substituiert sein können, oder Halogen und
n 0 oder 1 oder

$a_3$)

$R^1$ Methoxy, Ethyl oder Propyl und
$R^2$ 6-Methoxycarbonyl oder 6-Ethoxycarbonyl und
n 1 sowie

in allen Fällen $a_1$) - $a_3$)

$R^3$ Wasserstoff, $C_1$-$C_4$-Alkyl, insbesondere Wasserstoff oder Methyl,
$R^4$, $R^5$ Halogen, $C_1$-$C_4$-Alkyl, $C_1$-$C_4$-Alkoxy oder $C_1$-$C_4$-Alkylthio, wobei die letztgenannten 3 Reste unsubstituiert oder durch Halogen, $C_1$-$C_4$-Alkoxy oder $C_1$-$C_4$-Alkylthio substituiert sind,
Y O oder S, insbesondere O,
E CH oder N, insbesondere CH,

bedeuten.

Gesättigtes oder ungesättigtes Alkyl und Alkoxy bedeutet entsprechend geradkettiges oder verzweigtes Alkyl bzw. Alkoxy, Halogen bedeutet F, Cl, Br und J, vorzugsweise F und Cl.

Die Verbindungen der Formel (I) können Salze bilden, bei denen der Wasserstoff der $-SO_2$-NH-Gruppe durch ein für die Landwirtschaft geeignetes Kation ersetzt wird. Diese Salze sind im allgemeinen Metall-, insbesondere Alkali-, Erdalkali-, gegebenenfalls alkylierte Ammonium- oder organische Aminsalze.

Bei den genannten Formeln für die Verbindungen A und B wurde die Stereochemie nicht im einzelnen angegeben. Sofern Stereoisomere vorkommen können, sind mit den Formeln auch alle geometrischen Isomeren, Enantiomeren und Diastereomeren sowie deren Gemische umfaßt.

Bevorzugte herbizide Mittel enthalten als Verbindungen A ein oder mehrere Verbindungen der Formeln A1, A2 und A3, wobei die Formeln folgendes bedeuten:

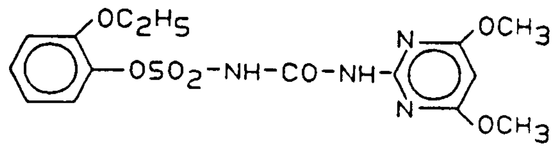

(A1)

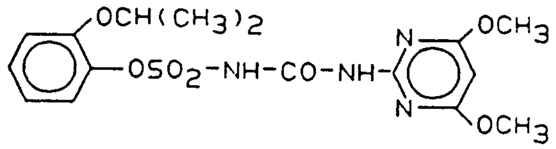

(A2)

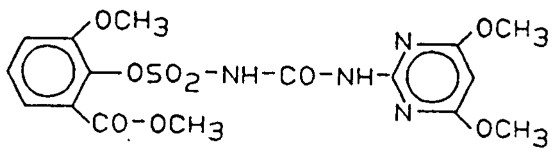

(A3)

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöckchen oder anderen Dauerorganen austreiben, werden durch die Wirkstoffkombinationen gut erfaßt. Dabei ist es gleichgültig, ob die Substanzen im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen Mittel kontrolliert werden können, ohne daß durch die Nennung eine Beschränkung auf bestimmte Arten erfolgen soll.

Auf der Seite der monokotylen Unkrautarten werden z. B. Avena, Lolium, Alopecurus, Phalaris, Echinochloa, Digitaria, Setaria etc. sowie Cyperusarten aus der annuellen Gruppe und auf seiten der perennierenden Spezies Agropyron, Cynodon, Imperata sowie Sorghum etc. und auch ausdauernde Cyperusarten gut erfaßt.

Bei dikotylen Unkrautarten erstreckt sich das Wirkungsspektrum auf Galium, Viola, Veronica, Lamium, Stellaria, Amaranthus, Sinapis, Ipomoea, Matricaria, Abutilon, Sida etc. auf der annuellen Seite sowie Convolvulus, Cirsium, Rumex, Artemisia etc. bei den perennierenden Unkräutern.

Unter den spezifischen Kulturbedingungen im Reis vorkommenden Unkräuter wie z. B. Sagittaria, Alisma, Eleocharis, Scirpus, Cyperus etc. werden von den erfindungsgemäßen Wirkstoffkombinationen ebenfalls hervorragend bekämpft.

Unter den spezifischen Kulturbedingungen im Mais und Reis werden wirtschaftlich wichtige monokotyle Unkräuter, wie z. B. Alopecurus myosuroides, Avena fatua, Echinochloa crus galli und Setaria viridis bekämpft.

Werden die erfindungsgemäßen herbiziden Mittel vor dem Keimen auf die Erdoberfläche appliziert, so wird entweder das Auflaufen der Unkrautkeimlinge vollständig verhindert, oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffkombinationen auf die grünen Pflanzenteile im Nachauflaufverfahren tritt ebenfalls sehr rasch nach der Behandlung ein drastischer Wachstumsstop ein, und die Unkrautpflanzen bleiben in dem zum Applikationszeitpunkt vorhandenen Wuchsstadium stehen oder sterben nach einer gewissen Zeit mehr oder weniger schnell ab, so daß auf diese Weise eine für die Kulturpflanzen schädliche Unkrautkonkurrenz sehr früh und nachhaltig durch den Einsatz der neuen erfindungsgemäßen Mittel beseitigt werden kann.

Obgleich die erfindungsgemäßen Mittel eine ausgezeichnete herbizide Aktivität gegenüber mono- und dikotylen Unkräutern aufweisen, werden Kulturpflanzen wirtschaftlich bedeutender Kulturen wie z.B. Weizen, Gerste, Roggen, Reis und Mais nur unwesentlich oder gar nicht geschädigt. Die Mittel eignen sich aus diesen Gründen sehr gut zur selektiven Bekämpfung von unerwünschtem Pflanzenwuchs in landwirtschaftlichen Nutzpflanzungen.

Mit den erfindungsgemäßen Wirkstoffkombinationen wird z. B. eine herbizide Wirkung erreicht, die über das hinausgeht, was als additive Wirkung der Einzelkomponenten zu erwarten gewesen ist. Solche Wirkungssteigerungen erlauben es, die Einsatzmengen der einzelnen Wirkstoffe erheblich zu reduzieren. Es wurden auch Wirkungsvorteile der Art gefunden, daß entweder die Dauerwirkung der Kombinationen verbessert wird oder eine Beschleunigung der Wirkungsgeschwindigkeit zu beobachten ist. Solche Eigenschaften sind deshalb neue, wirtschaftlich fortschrittliche Erfindungen, die dem Anwender erhebliche Vorteile bei der praktischen Unkrautbekämpfung bieten, indem er Unkräuter billiger oder rascher oder dauerhafter bekämpfen kann und dadurch in einem Kulturpflanzenbestand mehr Ertrag erntet.

Ferner wurde gefunden, daß bei einer Reihe der Wirkstoffkombinationen eine Safener- oder Antidotwirkung ausgeprägt vorhanden ist, d. h. daß phytotoxische Nebenwirkungen der verwendeten Wirkstoffe bei Kulturpflanzen, wie z. B. dem Reis, herabgesetzt oder gänzlich vermieden werden.

Die Wirkstoffkombinationen der Erfindung können zusätzlich einen Gehalt an einer oder mehrerer Verbindung(en) aus der Gruppe aufweisen, welche die Verbindungen

B1) 3,7-Dichlorchinolin-8-carbonsäure und deren Salze,

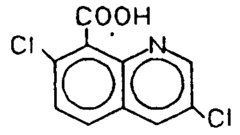

(B1)

B4) N-(Butoxymethyl)-2-chlor-N-(2,6-diethylphenyl)-acetamid,

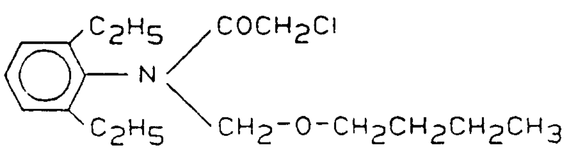

(B4)

B5) N-(2-Propoxyethyl)-2-chlor-N-(2,6-diethylphenyl)acetamid,

B6) 3,5-Bis(methylthio-carbonyl)-2-difluormethyl-4-(2-methylpropyl)-6-trifluormethyl-pyridin,

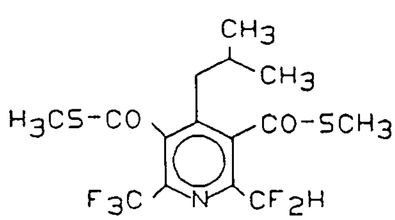

(B6)

B7) 2-(1,3-Benzthiazol-2-yloxy)-N-methyl-acetanilid,

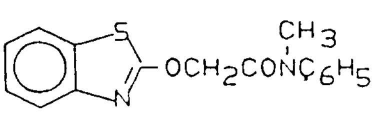

(B7)

B8) 2-[4-(6-Chlor-benzoxazol-2-yloxy)-phenoxy]-propionsäureethylester,

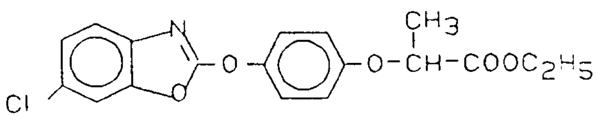

(B8)

und

B10) NTN-901 (Gräserherbizid)
enthält.

Die Verbindung B1 ist aus British Crop Protection Conference - Weeds, 1985, S. 77-83 als BAS 514 H (Quinchlorac) bekannt.

Die Verbindungen B4, B5, B7 und B8 sind allesamt in "The Pesticide Manual", British Crop Protection Council, 8th Ed., 1987 beschrieben; siehe B4 ("Butachlor") S. 106; B5 ("Pretilachlor") S.689; B7 ("Mefenacet") S. 526; B8 ("Fenoxaprop-ethyl") S. 379.

Verbindung B6 ist als "MON 7200" bekannt und von M. Fujiyama, M. Kasai und S. Yamane in "Proceedings of the 11th Asian-Pacific Weed Science Society Conference 1987, Seiten 455-460" beschrieben.

Die Verbindung NTN-901 von Nihon Tokusho Nohyaku Seizo (Japan) wird als selektives Herbizid zur Bekämpfung von Echinochloa in Reis eingesetzt.

Auch bei den genannten Formeln Für die Verbindungen B1, B4-B8 und B10 wurde die Stereochemie nicht im einzelnen angegeben. Sofern Stereoisomere vorkommen können, sind mit den Formeln auch alle geometrischen Isomeren, Enantiomeren und Diastereomeren sowie deren Gemische umfaßt. Bei der Verbindung B8 ist insbesondere auch D-Fenoxapropethyl umfaßt und bevorzugt.

Die Mischungsverhältnisse A : B können innerhalb weiter Grenzen schwanken und liegen in der Regel zwischen 1 : 0,5 bis 1 : 200. Die Wahl des Mischungsverhältnisses ist z. B. abhängig vom Mischungspartner, Entwicklungsstadium der Unkräuter, Unkrautspektrum und Klimabedingungen.

Vorzugsweise werden Mischungsverhältnisse von 1:1 bis 1:100 angewendet. Die Aufwandmengen des Herbizids A in den Wirkstoffmischungen liegen bevorzugt zwischen 10 und 100 g/ha, die Aufwandmengen von B zwischen 0,02 und 4,0 kg/ha.

Die erfindungsgemäßen Wirkstoffkombinationen können sowohl als Mischformulierungen der beiden Komponenten vorliegen, die dann in üblicher Weise mit Wasser verdünnt zur Anwendung gebracht werden, oder als sogenannte Tankmischungen durch gemeinsame Verdünnung der getrennt formulierten Komponenten mit Wasser hergestellt wenden.

Die Verbindungen A und B oder deren Kombinationen können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wäßrige Lösungen (SL), Emulsionen (EW) wie Öl-in Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Diese einzelnen Formulierungstypen sind im Prinzip bekannt und werden beispielsweise beschrieben in: Winnakker-Küchler, "Chemische Technologie", Band 7, C. Hauser Verlag München, 4. Aufl. 1986; van Valkenburg, "Pesticides Formulations", Marcel Dekker N. Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H. v. Olphen, "Introduction to Clay Colloid Chemistry", 2nd Ed., J. Wiley & Sons, N.Y., Marsden, "Solvents Guide", 2nd Ed., Interscience, N.Y. , 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N. Y. 1964; Schönfeldt, Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Düngemitteln und/oder Wachstumsregulatoren herstellen, z. B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole oder Fettamine, Alkan- oder Alkylbenzolsulfonate und Dispergiermittel, z. B. ligninsulfonsaures Natrium, 2,2'-dinaphthylmethan-6,6'disulfonsaures Natrium, dibutylnaphthalin-sulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten festen stoffen, z. B. Talkum, natürlichen Tonen wie Kaolin, Bentonit und Pyrophyllit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten übichen Weise - gewünschtenfalls in Mischung mit Düngemitteln - granuliert werden.

Die agrochemischen Zubereitungen enthalten in der Regel 0,1 bis 99 Gewichtsprozent, insbesondere 2 bis 95 Gew.-%, Wirkstoffe A + B. Die Konzentrationen der Wirstoffe A + B können in den Formulierungen verschieden sein.

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten wie wasserdispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids u.a. variiert die erforderliche Aufwandmenge der Verbindungen der Formel (I).

Folgende Beispiele dienen zur Erläuterung der Erfindung:

A. Formulierungsbeispiele

a) Ein Stäubmittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoff A + B, 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoff A + B mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 277°C) mischt und in einer Reibkugelmühle auf eine Feinheit von unter 5 Mikron vermahlt.

d) Ein emulgierbares Konzentrat wird erhalten aus 15 Gew.-Teilen Wirkstoff A + B, 75 Gew.-Teilen Cyclohexanon als Lösemittel und 10 Gew.-Teilen oxethyliertes Nonylphenol als Emulgator.

e) Ein in Wasser dispergierbares Granulat wird erhalten indem man

| | |
|---|---|
| 75 | Gewichtsteile Wirkstoffe A + B, |
| 10 | Gewichtsteile ligninsulfonsaures Calcium, |
| 5 | Gewichtsteile Natriumlaurylsulfat, |
| 3 | Gewichtsteile Polyvinylalkohol und |
| 7 | Gewichtsteile Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | |
|---|---|
| 25 | Gewichtsteile Wirkstoffe A + B, |
| 5 | Gewichtsteile 2,2'-dinaphthylmethan-6,6'-disulfonsaures Natrium, |
| 2 | Gewichtsteile oleoylmethyltaurinsaures Natrium, |
| 1 | Gewichtsteil Polyvinylalkohol, |
| 17 | Gewichtsteile Calciumcarbonat und |
| 50 | Gewichtsteile Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

Nach den unter a) bis f) beschriebenen Formulierungen werden beispielsweise die in der folgenden Tabelle 1 enthaltenen Wirkstoffkombinationen formuliert:

Tabelle 1

| Wirkstoff A | Wirkstoff B | Verhältnis |
|---|---|---|
| A1 | B2 | 1:2 |
| | | 1:10 |
| | | 1:100 |
| A1 | B3 | 1:2 |
| | | 1:10 |
| | | 1:100 |
| A2 | B2 | 1:2 |
| | | 1:10 |
| | | 1:100 |
| A2 | B3 | 1:2 |
| | | 1:10 |
| | | 1:100 |
| A3 | B2 | 1:2 |
| | | 1:10 |
| | | 1:100 |
| A3 | B3 | 1:2 |
| | | 1:10 |
| | | 1:100 |

## Biologische Beispiele

### 1. Unkrautwirkung im Vorauflauf

Samen bzw. Rhizomstücke von mono- und dikotylen Unkrautpflanzen werden in Plastiktöpfen von 9 cm Durchmesser in sandiger Lehmerde ausgelegt und mit Erde abgedeckt. Im Reisanbau vorkommende Unkräuter werden im mit Wasser gesättigten Boden kultiviert, wobei so viel Wasser in die Töpfe gefüllt wird, daß das Wasser bis zu Bodenoberfläche oder einige Millimeter darüber steht. Die in Form von benetzbaren Pulvern oder Emulsionskonzentraten formulierten erfindungsgemäßen Wirkstoffkombinationen sowie in parallelen Versuchen die entsprechend formulierten

Einzelwirkstoffe werden dann als wäßrige Suspensionen bzw. Emulsionen mit einer Wasseraufwandmenge von umgerechnet 600 bis 800 l/ha in unterschiedlichen Dosierungen auf die Oberfläche der Abdeckerde appliziert oder beim Reis ins Bewässerungswasser gegossen.

Nach der Behandlung werden die Töpfe im Gewächshaus aufgestellt und unter guten Wachstumsbedingungen für die Unkräuter gehalten. Die optische Bonitur der Pflanzen- bzw. der Auflaufschäden erfolgte nach dem Auflaufen der Versuchspflanzen nach einer Versuchszeit von 3 bis 4 Wochen im Vergleich zu unbehandelten Kontrollen. Die erfindungsgemäßen herbiziden Mittel weisen eine gute herbizide Vorauflaufwirksamkeit gegen ein breites Spektrum von Ungräsern und Unkräutern auf.

In allen Fällen wurde bei den Kombinationen unterschieden zwischen dem errechneten und dem gefundenen Wirkungsgrad. Der errechnete, theoretisch zu erwartende Wirkungsgrad einer Kombination wird ermittelt nach der Formel von S. R. Colby: Calculation of synergistic and antagonistic responses of herbicide combinations, Weeds 15 (1967) 20-22.

Diese Formel lautet:

$$E = X + Y - \frac{X \cdot Y}{100}$$

wobei

X = % Schädigung durch Herbizid A bei x kg/ha Aufwandmenge;

Y = % Schädigung durch Herbizid B bei y kg/ha Aufwandmenge;

E = die zu erwartende Schädigung durch die Herbidzide A + B bei x + y kg/ha.

Ist die tatsächliche Schädigung größer als die rechnerisch zu erwartende, so ist die Wirkung der Kombination mehr als additiv, d. h. es liegt ein synergistischer Wirkungseffekt vor.

Die erfindungsgemäßen Wirkstoffkombinationen haben eine herbizide Wirkung, die höher ist als sie aufgrund der beobachteten Wirkungen der Einzelkomponenten bei alleiniger Anwendung nach Colby zu erwarten ist. Die Wirkstoffkombinationen sind somit synergistisch (vgl. Tabelle 2)

Tabelle 2

| Vorauflaufanwendung | | | | | |
|---|---|---|---|---|---|
| Herbizid(e) | Dosis | % Herbizide Wirkung bei | | | |
| | | Reis verpflanzt | Reis gesät | ECCG | CYMO |
| A1 | 20 | 15 | 30 | 75 | 99 |
| | 5 | 10 | 10 | 30 | 50 |
| | 1,25 | 0 | 0 | 0 | 0 |
| B3 | 250 | 0 | 25 | 75 | 35 |
| | 60 | 0 | 0 | 20 | 0 |
| | 15 | 0 | 0 | 0 | 0 |
| A1+B3 | 20+250 | 15 | 40 | 95 (94) | 100 (99) |
| | 20+ 60 | 5 | 20 | 90 (80) | 100 (99) |
| | 5+250 | 5 | 25 | 90 (83) | 90 (68) |
| | 6+ 60 | 0 | 5 | 65 (44) | 85 (50) |
| B9 | 200 | 5 | 25 | 93 | 0 |
| | 50 | 0 | 10 | 25 | 0 |
| | 12 | 0 | 0 | 0 | 0 |
| A1+B9 | 20+ 50 | 0 | 20 | 90 (81) | 99 (99) |
| | 5+ 50 | 0 | 10 | 75 (48) | 95 (50) |
| | 5+ 12 | 0 | 0 | 60 (30) | 75 (50) |

Abkürzungen:
ECCG = Echinochloa crus galli;
CYMO = Cyprerus monti = Cyperus serotinus
AS = Aktive Substanz (bezogen auf reinen Wirkstoff)
( ) = erwarteter Wert nach Colby
A1 = 1-(4,6-Dimethoxy-pyrimid-2-yl)-3-[(2-ethoxyphenoxy)sulfonyl]-harnstoff
B3 = Thiobencarb
B9 = Dimepiperate

**2. Unkrautwirkung im Nachauflauf**

Samen bzw. Rhizomstücke von mono- und dikotylen Unkräutern werden in Plastiktöpfen in sandigem Lehmboden ausgelegt, mit Erde abgedeckt und im Gewächshaus unter guten Wachstumsbedingungen angezogen. Im Reisanbau vorkommende Unkräuter werden in Töpfen angezogen, in denen Wasser bis zu 2 cm über der Bodenoberfläche steht, und während der Versuchsphase kultiviert. Drei Wochen nach der Aussaat werden die Versuchspflanzen im Dreiblattstadium behandelt.

Die als Spritzpulver bzw. als Emulsionskonzentrate formulierten erfindungsgemäßen Wirkstoffkombinationen sowie in parallelen Versuchen die entsprechend formulierten Einzelwirkstoffe werden in verschiedenen Dosierungen mit einer Wasseraufwandmenge von umgerechnet 300 bis 600 l/ha auf die grünen Pflanzenteile gesprüht und nach ca. 3 bis 4 Wochen Standzeit der Versuchspflanzen im Gewächshaus unter optimalen Wachstumsbedingungen die Wirkung der Pärparate optisch im Vergleich zu unbehandelten Kontrollen bonitiert. Bei Unkräutern, die im Reisanbau vorkommen, werden die Wirkstoffe auch direkt ins Bewässerungswasser gegeben (Applikation in Analogie zur sogenannten Granulatanwendung) oder auf Pflanzen und ins Bewässerungswasser gesprüht. Die erfindungsgemäßen Mittel weisen auch im Nachauflauf eine gute herbizide Wirksamkeit gegen ein breites Spektrum wirtschaftlich wichtiger Ungräser und Unkräuter auf. Die Wirkungen der erfindungsgemäßen Mittel sind nach der Colby-Analyse (vgl. Biolog. Beispiel 1.) synergistisch (siehe Tabelle 3).

Tabelle 3

| Nachauflaufanwendung | | | | | |
|---|---|---|---|---|---|
| Herbizid(e) | Dosis | % Herbizide Wirkung bei | | | |
| | | Reis verpflanzt | Reis gesät | ECCG | CYMO |
| A1 | 20 | 0 | 0 | 30 | 70 |
| | 5 | 0 | 0 | 0 | 30 |
| | 1,25 | 0 | 0 | 0 | 10 |
| B2 | 1000 | 0 | 10 | 90 | 75 |
| | 250 | 0 | 0 | 48 | 45 |
| | 60 | 0 | 0 | 0 | 10 |
| A1+B2 | 20+250 | 0 | 0 | 85 (64) | 99 (84) |
| | 20+ 60 | 0 | 0 | 60 (30) | 90 (73) |
| | 5+250 | 0 | 0 | 70 (48) | 85 (62) |
| | 5+ 60 | 0 | 0 | 45 (0) | 55 (37) |
| | 1+ 60 | 0 | 0 | 30 (0) | 40 (19) |

Abkürzungen:
ECCG = Echinochloa crus galli;
CYMO = Cyprerus monti = Cyperus serotinus
AS = Aktive Substanz (bezogen auf reinen Wirkstoff)
( ) = erwarteter Wert nach Colby
A1 = 1-(4,6-Dimethoxy-pyrimid-2-yl)-3-[(2-ethoxyphenoxy)sulfonyl]-harnstoff
B2 = Molinate

**3. Kulturpflanzenverträglichkeit**

In weiteren Versuchen im Gewächshaus werden Samen einer größeren Anzahl von Kulturpflanzen und Unkräutern in sandigem Lehmboden ausgelegt und mit Erde abgedeckt. Reis wird als Wasserreis im wassergesättigten Boden angezogen und kultiviert.

Ein Teil der Töpfe wird sofort wie unter 1. beschrieben behandelt, die übrigen im Gewächshaus aufgestellt, bis die Pflanzen zwei bis drei echte Blätter entwickelt haben und dann mit den erfindungsgemäßen Wirkstoffkombinationen und zum Vergleich nur mit einem Einzelwirkstoff in unterschiedlichen Dosierungen, wie unter 2. beschrieben besprüht. Bei Wasserreis erfolgt die Applikation teilweise auch durch Gießen der Wirkstoffe bzw. deren Formulierung in das Bewässerungswasser.

Vier bis fünf Wochen nach der Applikation und Standzeit im Gewächshaus wird mittels optischer Bonitur festgestellt, daß die erfindungsgemäßen Wirkstoffkombinationen verschiedene Kulturen im Vor- und Nachauflaufverfahren selbst bei hohen Wirkstoffdosierungen ungeschädigt lassen. Sie schonen Gramineen-Kulturen wie z.B. Gerste, Weizen, Roggen, Sorghum-Hirsen und insbesondere Mais und Reis (siehe auch Tabellen 2 und 3, Spalten 3 und 4). Die erfindungsgemäßen Wirkstoffkombinationen weisen somit eine hohe Selektivität bei Anwendung zur Bekämpfung von unerwünschten Pflanzenwuchs in landwirtschaftlichen Kulturen auf.

Im Vergleich zu der alleinigen Anwendung der einzelnen Wirkstoffe zeigt sich besonders auch bei erhöhten Dosierungen, daß die Selektivität der Wirkstoffkombinationen im Vergleich zu den Einzelwirkstoffen bei gleicher Aufwandmenge des jeweils wirksamsten der Herbizide besser ist. Die Wirkstoffkombinationen sind somit geeignet, Herbizidschäden an Kulturpflanzen effektiv reduzieren zu können.

**Patentansprüche**

**Patentansprüche für folgenden Vertragsstaat : IT**

**1.** Herbizide Mittel gekennzeichnet durch einen synergistisch wirksamen Gehalt an

A) Verbindungen der allgemeinen Formel (I) oder deren Salze

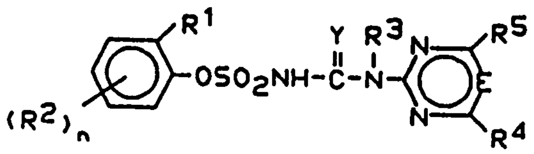

(I)

worin

$a_1$)

$R^1$ Ethoxy, Propoxy oder Isopropoxy und

$R^2$ Halogen, $NO_2$, $CF_3$, CN, $C_1$-$C_4$-Alkyl, $C_1$-$C_4$-Alkoxy, $C_1$-$C_4$-Alkylthio oder ($C_1$-$C_4$-Alkoxy)-carbonyl und

n 0, 1, 2 oder 3 oder

$a_2$)

$R^1$ gegebenenfalls ungesättigtes $C_1$-$C_8$-Alkoxy, das substitutiert ist durch Halogen, gegebenenfalls ungesättigtes $C_1$-$C_6$-Alkoxy, einen Rest der Formel ($C_1$-$C_6$-Alkyl)-S-, ($C_1$-$C_6$-Alkyl)-SO-, ($C_1$-$C_6$-Alkyl)-$SO_2$, ($C_1$-$C_6$-Alkyl)-O-CO-, $NO_2$, CN oder Phenyl; ferner $C_2$-$C_8$-Alkenyloxy oder -Alkinyloxy und

$R^2$ gesättigtes oder ungesättigtes $C_1$-$C_8$-Alkyl, Phenyl, Phenoxy, $C_1$-$C_4$-Alkoxy, $C_1$-$C_4$-Alkylthio, ($C_1$-$C_4$-Alkoxy)-carbonyl, wobei alle vorstehenden Reste für $R^2$ durch Halogen, $C_1$-$C_4$-Alkoxy oder $C_1$-$C_4$-Alkylthio substituiert sein können, oder Halogen, $NO_2$, $C_1$-$C_4$-Alkylsulfonyl oder -sulfinyl und

n 0, 1, 2 oder 3 oder

$a_3$)

$R^1$ $C_1$-$C_8$-Alkoxy und

$R^2$ $C_2$-$C_8$-Alkenyl oder -Alkinyl, Phenyl oder Phenoxy, wobei die genannten Reste für $R^2$ unsubstituiert oder durch Halogen, $C_1$-$C_4$-Alkoxy oder -Alkylthio substituiert sind, oder $C_1$-$C_4$-Alkylsulfonyl oder -Alkylsulfinyl und

n 1, 2 oder 3 oder

$a_4$)

$R^1$ - jeweils in 2-Stellung am Phenylrest - Halogen, Methoxy, Ethyl oder Propyl,

$R^2$ ($C_1$-$C_4$-Alkoxy)-carbonyl in 6-Stellung im Phenylrest und

n 1

sowie in allen Fällen $a_1$)-$a_4$)

$R^3$ Wasserstoff, gesättigtes oder ungesättigtes $C_1$-$C_8$-Alkyl oder $C_1$-$C_4$-Alkoxy,

$R^4$, $R^5$ unabhängig voneinander Wasserstoff, Halogen, $C_1$-$C_4$-Alkyl, $C_1$-$C_4$-Alkoxy, $C_1$-$C_4$-Alkylthio, wobei die letztgenannten drei Reste unsubstituiert oder durch. Halogen, $C_1$-$C_4$-Alkoxy oder $C_1$-$C_4$-Alkylthio substituiert sind,

Y O oder S und

E CH oder N

bedeuten,

in Kombination mit

B) einer oder mehreren Verbindung(en) aus der Gruppe, welche die Verbindungen

B2) N-(Ethylthio-carbonyl)-azepan,

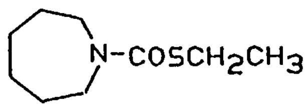

(B2)

B3) N,N-Diethyl-carbaminsäure-4-chlorbenzylthioester

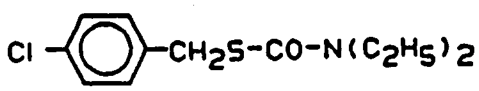

(B3)

und

B9) N-(2-Phenyl-prop-2-yl-thiocarbonyl)-piperidin

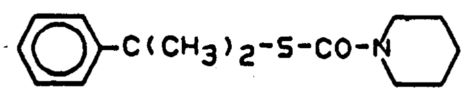

(B9)

enthält.

2. Mittel nach Anspruch 1, dadurch gekennzeichnet, daß es Verbindungen der Formel (I) oder deren Salze enthält, worin

$a_1$)

| | |
|---|---|
| $R^1$ | Ethoxy, Propoxy oder Isopropoxy und |
| $R^2$ | in Position 6 orientiert ist und die obengenannte Bedeutung hat, und |
| n | 0 oder 1 oder |

$a_2$)

| | |
|---|---|
| $R^1$ | gegebenenfalls ungesättigtes $C_1$-$C_4$-Alkoxy, das substituiert ist durch Halogen, $C_1$-$C_4$-Alkoxy, $C_1$-$C_4$-Alkylthio oder -sulfinyl oder -sulfonyl, ($C_1$-$C_4$-Alkoxy)-carbonyl, $NO_2$, CN oder Phenyl; ferner $C_2$-$C_5$-Alkenyloxy oder $C_2$-$C_4$-Alkinyloxy und |
| $R^2$ | $C_1$-$C_4$-Alkyl, $C_2$-$C_5$-Alkenyl, ($C_1$-$C_4$-Alkoxy)-carbonyl $C_1$-$C_4$-Alkoxy oder $C_1$-$C_4$-Alkylthio, die wie oben angegeben substituiert sein können, oder Halogen und |
| n | 0 oder 1 oder |

$a_3$)

| | |
|---|---|
| $R^1$ | Methoxy, Ethyl oder Propyl und |
| $R^2$ | 6-Methoxycarbonyl oder 6-Ethoxycarbonyl und |
| n | 1 sowie |

in allen Fällen $a_1$) - $a_3$)

| | |
|---|---|
| $R^3$ | Wasserstoff, $C_1$-$C_4$-Alkyl, |
| $R^4$, $R^5$ | Halogen, $C_1$-$C_4$-Alkyl, $C_1$-$C_4$-Alkoxy oder $C_1$-$C_4$-Alkylthio, wobei die letztgenannten 3 Reste unsubstituiert oder durch Halogen, $C_1$-$C_4$-Alkoxy oder $C_1$-$C_4$-Alkylthio substituiert sind, |
| Y | O oder S, |
| E | CH oder N |

bedeuten.

3. Mittel nach Anspruch 1 oder 2, dadurch gekennzeichnet, daß sie ein oder mehrere Verbindungen der Formeln A1, A2 und A3 oder deren Salze

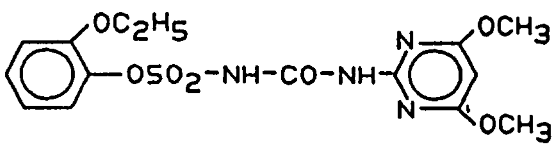

(A1)

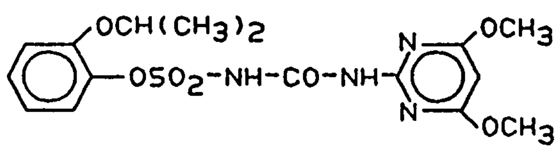

(A2)

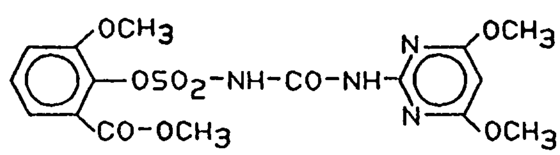

(A3)

enthalten.

4. Mittel nach einem oder mehreren der Ansprüche 1 bis 3, gekennzeichnet durch einen zusätzlichen Gehalt an einer oder mehreren Verbindung(en) aus der Gruppe, welche die Verbindungen

B1) 3,7-Dichlorchinolin-8-carbonsäure und deren Salze

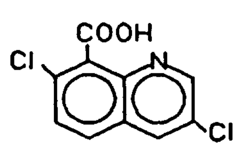

(B1)

B4) N-(Butoxymethyl)-2-chlor-N-(2,6-diethylphenyl)-acetamid,

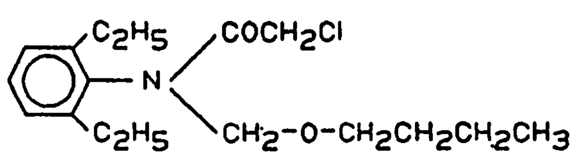

(B4)

B5) N-(2-Propoxyethyl)-2-chlor-N-(2,6-diethylphenyl)acetamid,

B6) 3,5-Bis(methylthio-carbonyl)-2-difluormethyl-4-(2-methylpropyl)-6-trifluormethyl-pyridin,

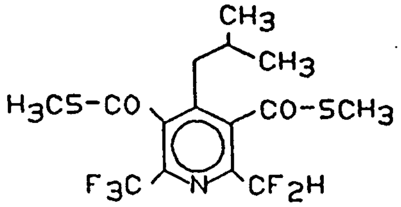

(B6)

B7) 2-(1,3-Benzthiazol-2-yloxy)-N-methyl-acetanilid,

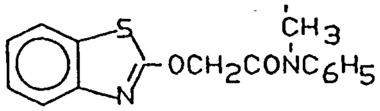

(B7)

B8) 2-[4-(6-Chlor-benzoxazol-2-yloxy)-phenoxy]-propionsäureethylester

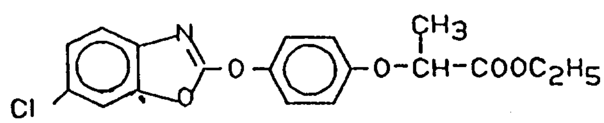

(B8)

und

B10) NTN-901 (Gräserherbizid)
enthält.

5. Mittel nach einem oder mehreren der Ansprüche 1 bis 4, dadurch gekennzeichnet, daß sie 0,1 bis 99 Gew.-% der Wirkstoffe A und B2, B3 und/oder B9 neben üblichen Formulierungshilfsmitteln enthalten.

6. Mittel nach einem oder mehreren der Ansprüche 1 bis 5, dadurch gekennzeichnet, daß sie die Wirkstoffe A und B2, B3 und/oder B9 im Gewichtsverhältnis 1 : 0,5 bis 1 : 200 enthalten.

7. Verfahren zur Herstellung eines Mittels nach einem oder mehreren der Ansprüche 1 bis 6, dadurch gekennzeichnet, daß man ein oder mehrere Verbindungen A mit B2, B3 und/oder B9 analog einer üblichen Pflanzenschutzmittelformulierung aus der Gruppe, enthaltend Spritzpulver, emulsierbare Konzentrate, wässrige Lösungen, Emulsionen, versprühbare Lösungen (tank-mix), Dispersionen auf Öl- oder Wasserbasis, Suspoemulsionen, Stäubemittel, Beizmittel, Boden- oder Streugranulate, wasserdispergierbare Granulate, ULV-Formulierungen, Mikrokapseln und Wachse, formuliert.

8. Verfahren zur Bekämpfung von unerwünschten Pflanzen, dadurch gekennzeichnet, daß man auf diese oder deren Anbauflächen eine herbizid wirksame Menge eines Mittels nach einem oder mehreren der Ansprüche 1 bis 6 appliziert.

9. Verfahren nach Anspruch 8, dadurch gekennzeichnet, daß Unkräter in Nutzpflanzenkulturen selektiv bekämpft werden.

**10.** Verfahren nach Anspruch 9, dadurch gekennzeichnet, daß die Nutzpflanzerkultur eine aus der Gruppe Weizen, Gerste, Roggen, Reis und Mais ist.

**Patentansprüche für folgenden Vertragsstaat : ES**

**1.** Verwendung von herbiziden Mitteln zur Unkrautbekämpfung, gekennzeichnet durch einen synergistisch wirksamen Gehalt der Mittel an

A) Verbindungen der allgemeinen Formel (I) oder deren Salze

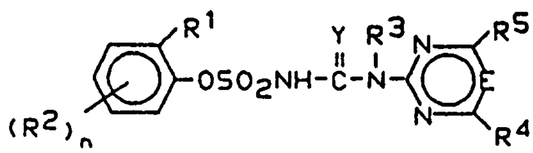

(I)

worin

a$_1$)

R$^1$ Ethoxy, Propoxy oder Isopropoxy und
R$^2$ Halogen, $NO_2$, $CF_3$, CN, $C_1$-$C_4$-Alkyl, $C_1$-$C_4$-Alkoxy, $C_1$-$C_4$-Alkylthio oder ($C_1$-$C_4$-Alkoxy)-carbonyl und
n 0, 1, 2 oder 3 oder

a$_2$)

R$^1$ gegebenenfalls ungesättigtes $C_1$-$C_8$-Alkoxy, das substitutiert ist durch Halogen, gegebenenfalls ungesattigtes $C_1$-$C_6$-Alkoxy, einen Rest der Formel ($C_1$-$C_6$-Alkyl)-S-, ($C_1$-$C_6$-Alkyl)-SO-, ($C_1$-$C_6$-Alkyl)-$SO_2$-, ($C_1$-$C_6$-Alkyl)-O-CO-, $NO_2$, CN oder Phenyl; ferner $C_2$-$C_8$-Alkenyloxy oder -Alkinyloxy und
R$^2$ gesättigtes oder ungesättigtes $C_1$-$C_8$-Alkyl, Phenyl, Phenoxy, $C_1$-$C_4$-Alkoxy, $C_1$-$C_4$-Alkylthio, ($C_1$-$C_4$-Alkoxy)-carbonyl, wobei alle vorstehenden Reste für $R^2$ durch Halogen, $C_1$-$C_4$-Alkoxy oder $C_1$-$C_4$-Alkylthio substituiert sein können, oder Halogen, $NO_2$, $C_1$-$C_4$-Alkylsulfonyl oder -sulfinyl und
n 0, 1, 2 oder 3 oder

a$_3$)

R$^1$ $C_1$-$C_8$-Alkoxy und
R$^2$ $C_2$-$C_8$-Alkenyl oder -Alkinyl, Phenyl oder Phenoxy, wobei die genannten Reste für $R^2$ unsubstituiert oder durch Halogen, $C_1$-$C_4$-Alkoxy oder -Alkylthio substituiert sind, oder $C_1$-$C_4$-Alkylsulfonyl oder -Alkylsulfinyl und
n 1, 2 oder 3 oder

a$_4$)

R$^1$ - jeweils in 2-Stellung am Phenylrest - Halogen, Methoxy, Ethyl oder Propyl,
R$^2$ ($C_1$-$C_4$-Alkoxy)-carbonyl in 6-Stellung im Phenylrest und
n 1

sowie in allen Fällen a$_1$)-a$_4$)

R$^3$ Wasserstoff, gesättigtes oder ungesättigtes $C_1$-$C_8$-Alkyl oder $C_1$-$C_4$-Alkoxy,

R$^4$, R$^5$ unabhängig voneinander Wasserstoff, Halogen, $C_1$-$C_4$-Alkyl, $C_1$-$C_4$-Alkoxy, $C_1$-$C_4$-Alkylthio, wobei die letztgenannten drei Reste unsubstituiert oder durch Halogen, $C_1$-$C_4$-Alkoxy oder $C_1$-

$C_4$-Alkylthio substituiert sind,

Y O oder S und

E CH oder N

bedeuten,

in Kombination mit

B) einer oder mehreren Verbindung(en) aus der Gruppe, welche die Verbindungen

B2) N-(Ethylthio-carbonyl)-azepan,

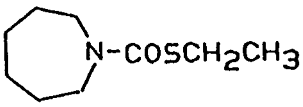

(B2)

B3) N,N-Diethyl-carbaminsäure-4-chlorbenzylthioester

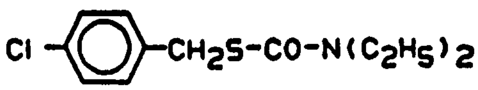

(B3)

und

B9) N-(2-Phenyl-prop-2-yl-thiocarbonyl)-piperidin.

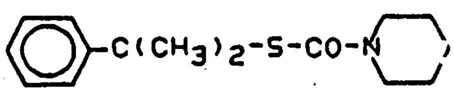

(B9)

enthält.

2. Verwendung nach Anspruch 1, dadurch gekennzeichnet, daß die Mittel Verbindungen der Formel (I) oder deren Salze enthalten, worin

$a_1$)

$R^1$ Ethoxy, Propoxy oder Isopropoxy und
$R^2$ in Position 6 orientiert ist und die obengenannte Bedeutung hat, und
n 0 oder 1 oder

$a_2$)

$R^1$ gegebenenfalls ungesättigtes $C_1$-$C_4$-Alkoxy, das substituiert ist durch Halogen, $C_1$-$C_4$-Alkoxy, $C_1$-$C_4$-Alkylthio oder -sulfinyl oder -sulfonyl, ($C_1$-$C_4$-Alkoxy)-carbonyl, $NO_2$, CN oder Phenyl; ferner $C_2$-$C_5$-Alkenyloxy oder $C_2$-$C_4$-Alkinyloxy und
$R^2$ $C_1$-$C_4$-Alkyl, $C_2$-$C_5$-Alkenyl, ($C_1$-$C_4$-Alkoxy)-carbonyl $C_1$-$C_4$-Alkoxy oder $C_1$-$C_4$-Alkylthio, die wie oben angegeben substituiert sein können, oder Halogen und

n 0 oder 1 oder

$a_3$)

$R^1$ Methoxy, Ethyl oder Propyl und
$R^2$ 6-Methoxycarbonyl oder 6-Ethoxycarbonyl und
n 1 sowie

in allen Fällen $a_1$) - $a_3$)

$R^3$ Wasserstoff, $C_1$-$C_4$-Alkyl,

$R^4$, $R^5$ Halogen, $C_1$-$C_4$-Alkyl, $C_1$-$C_4$-Alkoxy oder $C_1$-$C_4$-Alkylthio, wobei die letztgenannten 3 Reste unsubstituiert oder durch Halogen, $C_1$-$C_4$-Alkoxy oder $C_1$-$C_4$-Alkylthio substituiert sind,

Y O oder S,

E CH oder N

bedeuten.

3. Verwendung nach Anspruch 1 oder 2, dadurch gekennzeichnet, daß die Mittel ein oder mehrere Verbindungen der Formeln A1, A2 und A3 oder deren Salze

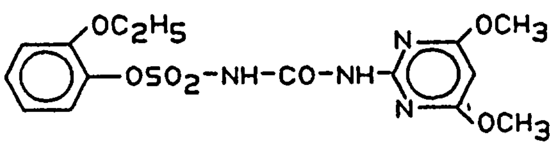
(A1)

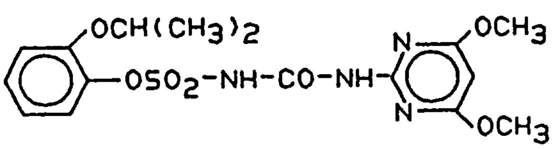
(A2)

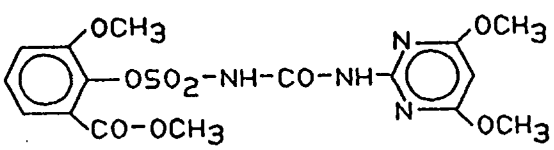
(A3)

enthalten.

4. Verwendung nach einem oder mehreren der Ansprüche 1 bis 3, dadurch gekennzeichnet, daß die Mittel einen zusätzlichen Gehalt an einer oder mehreren Verbindung(en) aus der Gruppe, welche die Verbindungen

B1) 3,7-Dichlorchinolin-8-carbonsäure und deren Salze,

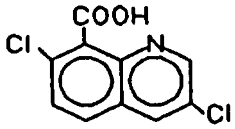
(B1)

B4) N-(Butoxymethyl)-2-chlor-N-(2,6-diethylphenyl)-acetamid,

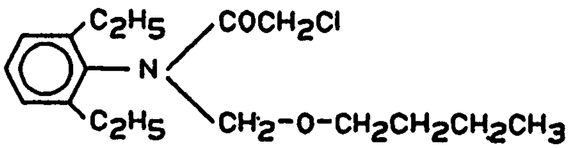

(B4)

B5) N-(2-Propoxyethyl)-2-chlor-N-(2,6-diethylphenyl)acetamid,

B6) 3,5-Bis(methylthio-carbonyl)-2-difluormethyl-4-(2-methylpropyl)-6-trifluormethyl-pyridin,

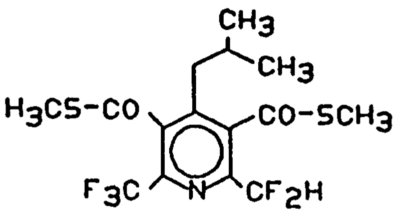

(B6)

B7) 2-(1,3-Benzthiazol-2-yloxy)-N-methyl-acetanilid,

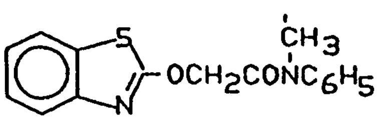

(B7)

B8) 2-[4-(6-Chlor-benzoxazol-2-yloxy)-phenoxy]-propionsäureethylester

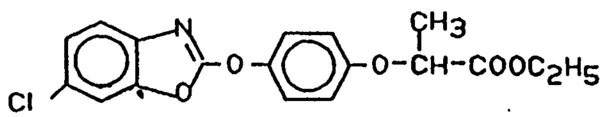

(B8)

und

B10) NTN-901 (Gräserherbizid)
enthält,

aufweisen.

5. Verwendung nach einem oder mehreren der Ansprüche 1 bis 4, dadurch gekennzeichnet, daß die Mittel 0,1 bis 99 Gew.-% der Wirkstoffe A und B2, B3 und/oder B9 neben üblichen Formulierungshilfsmitteln enthalten.

6. Verwendung nach einem oder mehreren der Ansprüche 1 bis 5, dadurch gekennzeichnet, daß die Mittel die Wirkstoffe A und B2, B3 und/oder B9 im Gewichtsverhältnis 1 : 0,5 bis 1 : 200 enthalten.

7. Verfahren zur Herstellung eines Mittels nach einem oder mehreren der Ansprüche 1 bis 6, dadurch gekennzeichnet, daß man ein oder mehrere Verbindungen A mit B2, B3 und/oder B9 analog einer üblichen Pflanzenschutzmittelformulierung aus der Gruppe, enthaltend Spritzpulver, emulsierbare Konzentrate, wässrige Lösungen, Emulsionen, versprühbare Lösungen (tank-mix), Dispersionen auf Öl- oder Wasserbasis, Suspoemulsionen, Stäubemittel, Beizmittel, Boden- oder Streugranulate, wasserdispergierbare Granulate, ULV-Formulierungen, Mikrokapseln und Wachse, formuliert.

**8.** Verfahren zur Bekämpfung von unerwünschten Pflanzen, dadurch gekennzeichnet, daß man auf diese oder deren Anbauflächen eine herbizid wirksame Menge eines Mittels nach einem oder mehreren der Ansprüche 1 bis 6 appliziert.

**9.** Verfahren nach Anspruch 8, dadurch gekennzeichnet, daß Unkräter in Nutzpflanzenkulturen selektiv bekämpft werden.

**10.** Verfahren nach Anspruch 9, dadurch gekennzeichnet, daß die Nutzpflanzenkultur eine aus der Gruppe Weizen, Gerste, Roggen, Reis und Mais ist.

## Claims

**Claims for the following Contracting State : IT**

**1.** Herbicidal agents, characterized by a synergistically effective amount of

**A)** compounds having the general formula (I) or salts thereof,

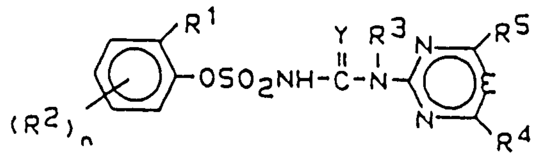

(I)

wherein

$a_1$)

$R^1$ is ethoxy, propoxy or isopropoxy and
$R^2$ is halogen, $NO_2$, $CF_3$, CN, $C_1$-$C_4$-alkyl, $C_1$-$C_4$-alkoxy, $C_1$-$C_4$-alkylthio or ($C_1$-$C_4$-alkoxy)carbonyl and
n is 0, 1, 2 or 3 or

$a_2$)

$R^1$ is, if possible, unsaturated $C_1$-$C_8$-alkoxy for which halogen is substituted, if possible, unsaturated $C_1$-$C_6$-alkoxy, a residue having the formula ($C_1$-$C_6$-alkyl)-SO-, ($C_1$-$C_6$-alkyl)-$SO_2$-, ($C_1$-$C_6$-alkyl)-O-CO-, $NO_2$, CN or phenyl; is further $C_2$-$C_8$-alkenyloxy or -alkinyloxy and

$R^2$ is saturated or unsaturated $C_1$-$C_8$-alkyl, phenyl, phenoxy, $C_1$-$C_4$-alkoxy, $C_1$-$C_4$-alkylthio, ($C_1$-$C_4$-alkoxy)carbonyl, wherein halogen, $C_1$-$C_4$-alkoxy or $C_1$-$C_4$-alkylthio may substitute for all the precedent $R^2$ residues, or halogen, $NO_2$, $C_1$-$C_4$-alkylsulfonyl or sulfinyl and

n is 0, 1, 2 or 3 or

$a_3$)

$R^1$ is alkoxy and

$R^2$ is $C_2$-$C_8$-alkenyl or alkinyl, phenyl or phenoxy, wherein the designated $R^2$ residues are not replaced, or wherein halogen, $C_1$-$C_4$-alkoxy or $C_1$-$C_4$-alkylthio substitutes for said $R_2$ residues, or

is $C_1$-$C_4$-alkylsulfonyl or -alkylsulfinyl and

n is 1, 2 or 3 or

$a_4$)

$R^1$ is - each time at position 2 at the phenyl residue - halogen, methoxy, ethyl or propyl,

$R^2$ is ($C_1$-$C_4$-alkoxy)carbonyl at position 6 in the phenyl residue and

n is 1,

in all cases $a_1$)-$a_4$) as well,

$R^3$ is hydrogen, saturated or unsaturated $C_1$-$C_8$-alkyl or $C_1$-$C_4$-alkoxy,

$R^4$, $R^5$ are independent hydrogen, halogen, $C_1$-$C_4$-alkyl, $C_1$-$C_4$-alkoxy, $C_1$-$C_4$-alkylthio, wherein the last-mentioned three residues are not replaced, or are halogen, $C_1$-$C_4$-alkoxy or $C_1$-$C_4$-alkylthio substitute for said last-mentioned residues,

Y is O or S and

E is CH or N,

in combination with
**B)** one or more compound(s) selected from the group comprising

B2) N-(ethylthiocarbonyl)-azepane

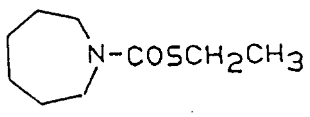

(B2)

B3) N,N-diethylcarbamic acid-4-chlorobenzylthioester

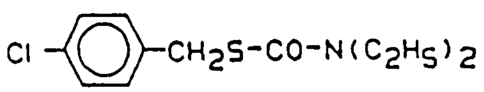

(B3)

and

B9) N-(2-phenyl-prop-2-yl-thiocarbonyl)-piperidine.

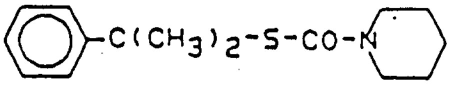

(B9)

2. Agent according to claim 1, characterized in that it comprises compounds of the formula (I) or salts thereof, wherein

$a_1$)

$R^1$ is ethoxy, propoxy or isopropoxy and

$R^2$ is orientated at position 6 and has the above-mentioned denotation, and

n is 0 or 1, or

$a_2$)

$R^1$ is, if possible, unsaturated $C_1$-$C_4$-alkoxy which is replaced by halogen, $C_1$-$C_4$-alkoxy, $C_1$-$C_4$-alkylthio or -sulfinyl or -sulfonyl, ($C_1$-$C_4$alkoxy)carbonyl, $NO_2$, CN or phenyl; and is further $C_2$-$C_5$-alkenyloxy or $C_2$-$C_4$-alkinyloxy and

$R^2$ is $C_1$-$C_4$-alkyl, $C_2$-$C_5$-alkenyl, ($C_1$-$C_4$-alkoxy)carbonyl, $C_1$-$C_4$-alkoxy or $C_1$-$C_4$-alkylthio, which, as mentioned above, may be replaced, or is halogen and

n is 0 or 1, or

$a_3$)

$R^1$ is methoxy, ethyl or propyl, and

$R^2$ is 6-methoxycarbonyl or is 6-ethoxycarbonyl, and

n is 1, as well as

in all cases $a_1$)-$a_3$)

$R^3$ is hydrogen, $C_1$-$C_4$-alkyl,

$R^4$, $R^5$ are halogen, $C_1$-$C_4$-alkyl, $C_1$-$C_4$-alkoxy or $C_1$-$C_4$-alkylthio, wherein the last-mentioned three residues remain unsubstituted or are replaced by halogen, $C_1$-$C_4$-alkoxy or $C_1$-$C_4$-alkylthio,

Y is O or S, and

E is CH or N.

3. Agents according to claim 1 or 2, characterized in that they comprise one or several compound(s) of the formulae A1, A2 and A3, or salts thereof

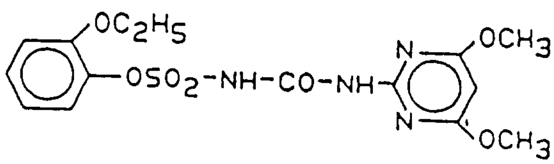

(A1)

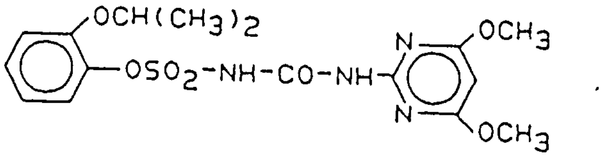

(A2)

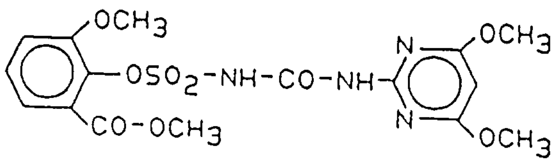

(A3)

4. Agents according to one or several of claims 1 to 3, characterized by an additional amount of one or several compound(s), selected from the group comprising the compounds

B1) 3,7-dichloroquinoline-8-carbonic acid and salts thereof

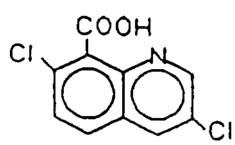

(B1)

B4) N-(butoxymethyl)-2-chloro-N-(2,6-diethylphenyl)-acetamide

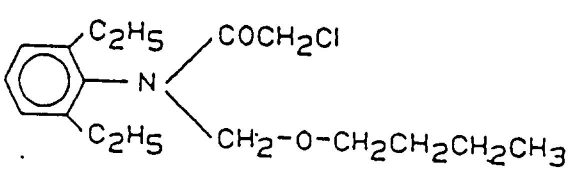

(B4)

B5) N-(2-propoxyethyl)-2-chloro-N-(2,6-diethylphenyl)-acetamide

B6) 3,5-bis(methylthio-carbonyl)-2-difluoromethyl-4-(2-methylpropyl)-6-trifluoromethylpyridine,

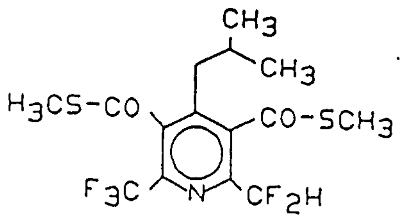

(B6)

B7) 2-(1,3-benzthiazole-2-yloxy)-N-methyl-acetanilide,

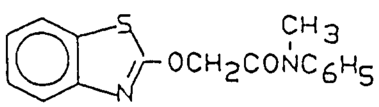

(B7)

B8) 2-[4-(6-benzoxazole-2yloxy)-phenoxy]-ethylpropionate,

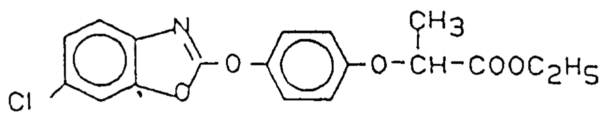

(B8)

and

B10) NTN-901 (grass herbicide).

5. Agents according to one or several of claims 1 to 4, characterized in that they comprise 0.1 to 99 % by weight of the active ingredients A and B2, B3 and/or B9 in addition to usual formulation auxiliaries.

6. Agents according to one or several of claims 1 to 5, characterized in that they comprise the active ingredients A and B2, B3 and/or B9 in a ratio of the weight of 1:0.5 to 1:200.

7. A process for the preparation of an agent according to one or several of claims 1 to 6, characterized in that one or several of compounds A are formulated with B2, B3 and/or B9 correspondent to usual formulations of plant protection products selected from the group comprising wettable powder, emulsive concentrates, aqueous solutions, emulsions, sprayable solutions (tank-mix), dispersions on the basis of oil or water, suspoemulsions, dustable agents, wet disinfectants, bottom or sprinkle granulates, water dispersable granulates, ULV-formulations, micocapsules and waxes.

8. A method for the control of unwanted plants, characterized in that a herbicidally effective amount of an agent according to one or several of claims 1 to 6 is applied on said plants or on the cultivated areas thereof.

9. A method according to claim 8, characterized in that weeds are selectively controlled in growings of useful plants.

10. A method according to claim 9, characterized in that the growing of useful plants is one of the group comprising wheat, barley, rye, rice and maize.

**Claims for the following Contracting State : ES**

1. Use of herbicidal agents for weed control, characterized by a synergistically effective amount of said agents comprising

A) compounds having the general formula (I) or salts thereof,

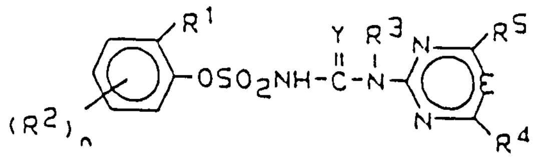

(I)

wherein

$a_1$)

$R^1$ is ethoxy, propoxy or isopropoxy and

$R^2$ is halogen, $NO_2$, $CF_3$, CN, $C_1$-$C_4$-alkyl, $C_1$-$C_4$-alkoxy, $C_1$-$C_4$-alkylthio or ($C_1$-$C_4$-alkoxy)carbonyl and

n is 0, 1, 2 or 3 or

$a_2$)

$R^1$ is, if possible, unsaturated $C_1$-$C_8$-alkoxy for which halogen is substituted, if possible, unsaturated $C_1$-$C_6$-alkoxy, a residue having the formula ($C_1$-$C_6$-alkyl)-SO-, ($C_1$-$C_6$-alkyl)-$SO_2$-, ($C_1$-$C_6$-alkyl)-O-CO-, $NO_2$, CN or phenyl; is further $C_2$-$C_8$-alkenyloxy or -alkinyloxy and

$R^2$ is saturated or unsaturated $C_1$-$C_8$-alkyl, phenyl, phenoxy, $C_1$-$C_4$-alkoxy, $C_1$-$C_4$-alkylthio, ($C_1$-$C_4$-alkoxy)carbonyl, wherein halogen, $C_1$-$C_4$-alkoxy or $C_1$-$C_4$-alkylthio alkylthio, ($C_1$-$C_4$-alkoxy)carbonyl, wherein halogen, $C_1$-$C_4$-alkoxy or $C_1$-$C_4$-alkylthio may substitute for all the precedent $R^2$ residues, or halogen, $NO_2$, $C_1$-$C_4$-alkylsulfonyl or sulfinyl and

n is 0, 1, 2 or 3 or

$a_3$)

$R^1$ is alkoxy and

$R^2$ is $C_2$-$C_8$-alkenyl or alkinyl, phenyl or phenoxy, wherein the designated $R^2$ residues are not replaced, or wherein halogen, $C_1$-$C_4$-alkoxy or $C_1$-$C_4$-alkylthio substitutes for said $R_2$ residues, or is $C_1$-$C_4$-alkylsulfonyl or -alkylsulfinyl and

n is 1, 2 or 3 or

$a_4$)

$R^1$ is - each time at position 2 at the phenyl residue - halogen, methoxy, ethyl or propyl,

$R^2$ is ($C_1$-$C_4$-alkoxy)carbonyl at position 6 in the phenyl residue and

n is 1,

in all cases $a_1$)-$a_4$) as well,

$R^3$ is hydrogen, saturated or unsaturated $C_1$-$C_8$-alkyl or $C_1$-$C_4$-alkoxy,

$R^4$, $R^5$ are independent hydrogen, halogen, $C_1$-$C_4$-alkyl, $C_1$-$C_4$-alkoxy, $C_1$-$C_4$-alkylthio, wherein the last-mentioned three residues are not replaced, or are halogen, $C_1$-$C_4$-alkoxy or $C_1$-$C_4$-alkylthio substitute for said last-mentioned residues,

Y is O or S and

E is CH or N,

in combination with
**B)** one or more compound(s) selected from the group comprising

B2) N-(ethylthiocarbonyl)-azepane

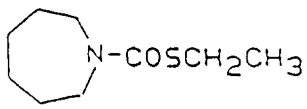

(B2)

B3) N,N-diethylcarbamic acid-4-chlorobenzylthioester

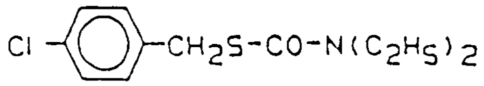

(B3)

and

B9) N-(2-phenyl-prop-2-yl-thiocarbonyl)-piperidine.

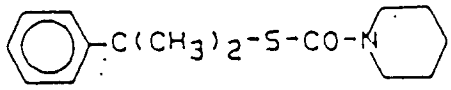

(B9)

**2.** Use according to claim 1, characterized in that the agents comprise compounds of the formula (I) or salts thereof, wherein

$a_1$)

$R^1$ is ethoxy, propoxy or isopropoxy and

$R^2$ is orientated at position 6 and has the above-mentioned denotation, and

n is 0 or 1, or

$a_2$)

$R^1$ is, if possible, unsaturated $C_1$-$C_4$-alkoxy which is replaced by halogen, $C_1$-$C_4$-alkoxy, $C_1$-$C_4$-alkylthio or -sulfinyl or -sulfonyl, ($C_1$-$C_4$-alkoxy)carbonyl, $NO_2$, CN or phenyl; and is further $C_2$-$C_5$-alkenyloxy or $C_2$-$C_4$-alkinyloxy and

$R^2$ is $C_1$-$C_4$-alkyl, $C_2$-$C_5$-alkenyl, ($C_1$-$C_4$-alkoxy)carbonyl, $C_1$-$C_4$-alkoxy or $C_1$-$C_4$-alkylthio, which, as mentioned above, may be replaced, or is halogen and

n is 0 or 1, or

$a_3$)

$R^1$ is methoxy, ethyl or propyl, and

$R^2$ is 6-methoxycarbonyl or is 6-ethoxycarbonyl, and

n is 1, as well as

in all cases $a_1$)-$a_3$)

$R^3$ is hydrogen, $C_1$-$C_4$-alkyl,

$R^4$, $R^5$ are halogen, $C_1$-$C_4$-alkyl, $C_1$-$C_4$-alkoxy or $C_1$-$C_4$-alkylthio, wherein the last-mentioned three residues remain unsubstituted or are replaced by halogen, $C_1$-$C_4$-alkoxy or $C_1$-$C_4$-alkylthio,

Y is O or S, and

E is CH or N.

**3.** Use according to claim 1 or 2, characterized in that said agents comprise one or several compound(s) of the formulae A1, A2 and A3, or salts thereof

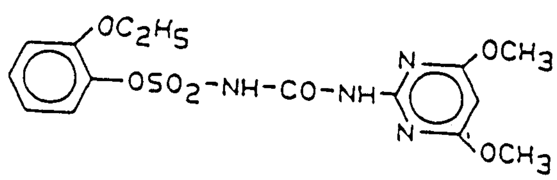

(A1)

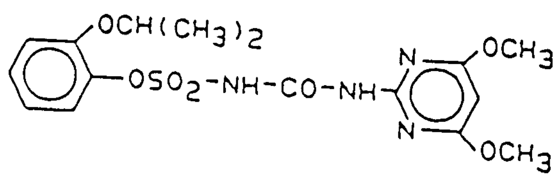

(A2)

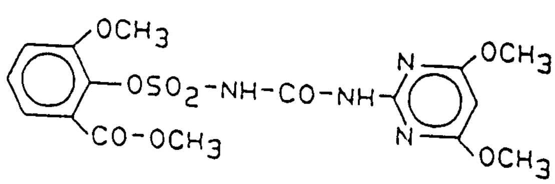

(A3)

**4.** Use according to one or several of claims 1 to 3, characterized in that said agents comprise an additional amount of one or several compound(s), selected from the group comprising the compounds

B1) 3,7-dichloroquinoline-8-carbonic acid and salts thereof

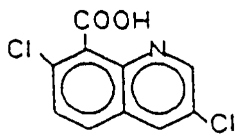

(B1)

B4) N-(butoxymethyl)-2-chloro-N-(2,6-diethylphenyl)-acetamide

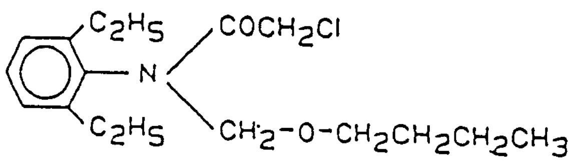

(B4)

B5) N-(2-propoxyethyl)-2-chloro-N-(2,6-diethylphenyl)-acetamide

B6) 3,5-bis(methylthio-carbonyl)-2-difluoromethyl-4-(2-methylpropyl)-6-trifluoromethylpyridine,

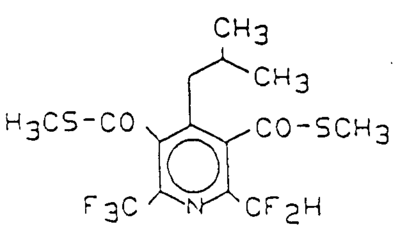

(B6)

B7) 2-(1,3-benzthiazole-2-yloxy)-N-methyl-acetanilide,

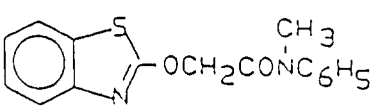

(B7)

B8) 2-[4-(6-benzoxazole-2yloxy)-phenoxy]-ethylpropionate,

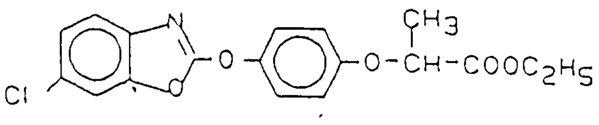

(B8)

and

B10) NTN-901 (grass herbicide).

5. Use according to one or several of claims 1 to 4, characterized in that the agents comprise 0.1 to 99 % by weight of the active ingredients A and B2, B3 and/or B9 in addition to usual formulation auxiliaries.

6. Use according to one or several of claims 1 to 5, characterized in that the agents comprise the active ingredients A and B2, B3 and/or B9 in a ratio of the weight of 1:0.5 to 1:200.

7. A process for the preparation of an agent according to one or several of claims 1 to 6, characterized in that one or several of compounds A are formulated with B2, B3 and/or B9 correspondent to usual formulations of plant protection products selected from the group comprising wettable powder, emulsive concentrates, aqueous solutions, emulsions, sprayable solutions (tank-mix), dispersions on the basis of oil or water, suspoemulsions, dustable agents, wet disinfectants, bottom or sprinkle granulates, water dispersable granulates, ULV-formulations, micocapsules and waxes.

8. A method for the control of unwanted plants, characterized in that a herbicidally effective amount of an agent according to one or several of claims 1 to 6 is applied on said plants or on the cultivated areas thereof.

9. A method according to claim 8, characterized in that weeds are selectively controlled in growings of useful plants.

10. A method according to claim 9, characterized in that the growing of useful plants is one of the group comprising wheat, barley, rye, rice and maize.

**Revendications**

**Revendications pour l'Etat contractant suivant : IT**

1. Agents herbicides, caractérisés par une quantité synergiquement active

**A**) de composés de la formule générale (I) ou de ses sels

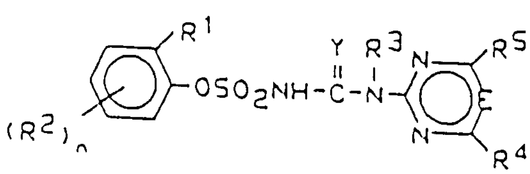

(I)

où

$a_1$)

$R^1$ est éthoxy, propoxy ou isopropoxy et

$R^2$ est halogène, $NO_2$, $CF_3$, CN, $C_1$-$C_4$-alkyle, $C_1$-$C_4$-alkoxy, $C_1$-$C_4$-alkylthio ou ($C_1$-$C_4$-alkoxy)carbonyle et

n est 0, 1, 2 ou 3, ou

$a_2$)

$R^1$ est, le cas échéant, $C_1$-$C_8$-alkoxy insaturé qui est substitué par l'halogène, est, le cas échéant, $C_1$-$C_6$-alkoxy insaturé, un radical de la formule choisie dans le groupe consistant en ($C_1$-$C_6$-alkyl)-S-, ($C_1$-$C_6$-alkyl)-SO-, ($C_1$-$C_6$-alkyl)-$SO_2$-, ($C_1$-$C_6$-alkyl)-O-CO-, $NO_2$, CN ou phényle; est de plus $C_2$-$C_8$-alcènyloxy ou alcynyloxy et

$R^2$ est $C_1$-$C_8$-alkyle saturé ou insaturé, phényle, phénoxy, $C_1$-$C_4$-alkoxy, $C_1$-$C_4$-alkylthio, ($C_1$-$C_4$-alkoxy)carbonyle, dont tous les radicaux précités pour $R^2$ peuvent être substitués par halogène, $C_1$-$C_4$-alkoxy ou -alkylthio, ou par halogène, $NO_2$, $C_1$-$C_4$-alkylsulfonyle ou -sulfinyle, et

n est 0, 1, 2 ou 3, ou

$a_3$)

$R^1$ est $C_1$-$C_8$-alkoxy et

$R^2$ est $C_2$-$C_8$-alcènyle ou -alcynyle, phényle ou phénoxy, les radicaux dénommés pour $R^2$ sont insubstitués ou substitués par halogène, $C_1$-$C_4$-alkoxy ou alkylthio, ou est alkylsulfonyle ou -alkylsulfinyle, et

n est 1, 2 ou 3, ou

$a_4$)

$R^1$ est halogène, méthoxy, éthyle ou propyle, chacun en position 2 au radical phényle,

$R^2$ est ($C_1$-$C_4$-alkoxy)carbonyle en position 6 du radical phényle, et

n est 1;

aussi bien que dans tous les cas $a_1$) à $a_4$)

$R^3$ est hydrogène, $C_1$-$C_8$-alkyle saturé ou insaturé ou $C_1$-$C_4$-alkoxy,

$R^4$, $R^5$ sont, indépendemment l'un de l'autre, hydrogène, $C_1$-$C_4$-alkyle, $C_1$-$C_4$-alkoxy, $C_1$-$C_4$-alkylthio, les trois radicaux mentionnés en dernier lieu étant insubstitués ou substitués par halogène, $C_1$-$C_4$-alkoxy ou $C_1$-$C_4$-alkylthio,

Y est O ou S et

E est CH ou N,

en combinaison avec

**B)** un ou plusieurs composé(s) choisi(s) dans le groupe comportant les composés

B2) N-(éthylthio-carbonyl)-azépane

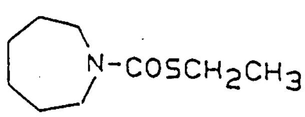

(B2)

B3) N,N-diéthylthiocarbamate de 4-chlorobenzyle

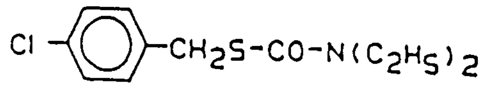

(B3)

et

B9) N-(2-phényl-prop-2-yl-thiocarbonyl)-pipéridine

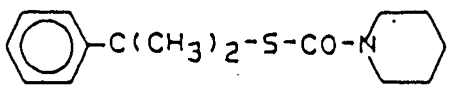

(B9)

**2.** Agent d'après la revendication 1, caractérisé en ce qu'il comporte des composés de la formule (I) ou des sels de celle-ci, où

$a_1$)

$R^1$ est éthoxy, propoxy, ou isopropoxy et

$R^2$ est orienté à la position 6 et a la signification sus-nommée, et

n est 0 ou 1, ou

$a_2$)

$R^1$ est, le cas échéant, $C_1$-$C_4$-alkoxy insaturé qui est substitué par halogène, $C_1$-$C_4$-alkoxy, $C_1$-$C_4$-alkylthio ou -sulfinyle ou -sulfonyle, ($C_1$-$C_4$-alkoxy)-carbonyle, $NO_2$, CN ou phényle; de plus est $C_2$-$C_5$-alcényloxy ou $C_2$-$C_4$-alcynyloxy, et

$R^2$ est $C_1$-$C_4$-alkyle, $C_2$-$C_5$-alcényle, ($C_1$-$C_4$-alkoxy)-carbonyle, $C_1$-$C_4$-alkoxy ou $C_1$-$C_4$-alkylthio qui, comme susmentionné, peuvent être substitués, ou est l'halogène, et

n est 0 ou 1, ou

$a_3$)

$R^1$ est méthoxy, éthyle ou propyle, et

$R^2$ est 6-méthoxycarbonyle ou 6-éthoxycarbonyle, et

n est 1,

aussi bien que dans tous les cas $a_1$) à $a_3$)

$R^3$ est hydrogène, $C_1$-$C_4$-alkyle,

$R^4$, $R^5$ sont hydrogène, $C_1$-$C_4$-alkyle, $C_1$-$C_4$-alkoxy ou $C_1$-$C_4$-alkylthio, les trois radicaux mentionnés en dernier lieu étant insubstitués ou substitués par halogène, $C_1$-$C_4$-alkoxy ou $C_1$-$C_4$-alkylthio,

Y est O ou S et

E est CH ou N.

3. Agents d'après la revendication 1 ou 2, caractérisés en ce qu'ils comportent un ou plusieurs composés ayant les formules A1, A2 ou A3 ou des sels de celles-ci

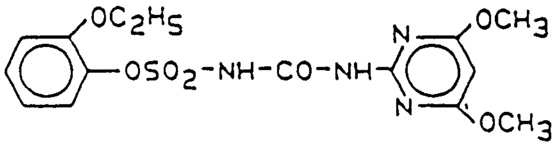

(A1)

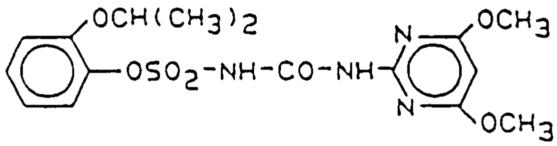

(A2)

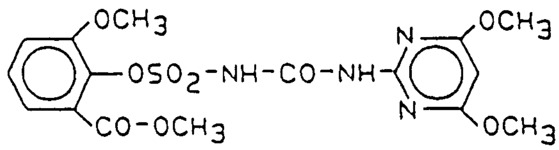

(A3)

4. Agent d'après une ou plusieures des revendications 1 à 3, caractérisé par un teneur additionnel en un ou plusieurs composé(s) choisi(s) dans le groupe comportant les composés

B1) acide 3,7-dichloroquinoline-8-carboxylique ou ses sels

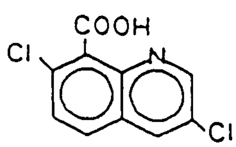

(B1)

B4) N-(2-butoxyéthyl)-2-chlor-N-(2,6-diéthylphényl)-acétamide,

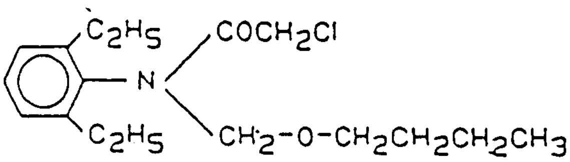

(B4)

B5) N-(2-propoxyéthyl)-2-chlor-N-(2,6-diéthylphényl)-acétamide,

B6) 3,5-bis(méthylthio-carbonyl)-2-difluorométhyl-4-(2-méthylpropyl)-6-trifluorométhylpyridine.

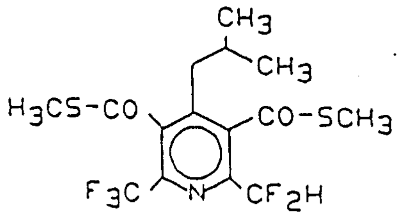

(B6)

B7) 2-(1,3-benzthiazol-2-yloxy)-N-méthyl-acetanilide,

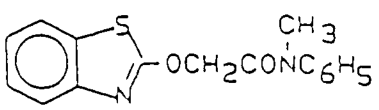

(B7)

B8) 2-[4-(6-chlor-benzoxazol-2-yloxy)-phénoxy]-propionate d'éthyle

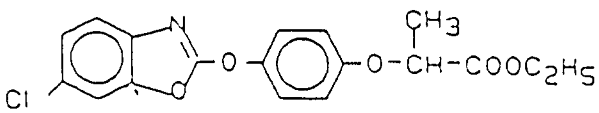

(B8)

et

B10) NTN-901 (herbicide).

5. Agents d'après une ou plusieures des revendications 1 à 4, caractérisés en ce qu'ils contiennent 0,1 à 99 % en poids des matières actives A et B2, B3 et/ou B9 sans compter les moyens auxiliaires habituels de formulation.

6. Agents d'après une ou plusieures des revendications 1 à 5, caractérisés en ce qu'ils contiennent les matières actives A et B2, B3 et/ou B9 en proportion de poids de 1:0,5 à 1:200.

7. Procédé pour la préparation d'un agent d'après une ou plusieures des revendications 1 à 6, caractérisés en ce que l'on exécute une formulation en formant une ou plusieurs composes A avec B2, B3 et/ou B9 par analogie avec une formulation habituelle de produits protectifs pour plantes, choisie dans le groupe contenant poudre mouillable, concentrés émulsifiables, solutions aqueuses, émulsions, solutions pulvérisables (tank-mix), dispersions sur la base d'huile ou d'eau, suspoémulsions, agents de poudrage, agents désinfectants, granulat à appliquer sur sol ou à saupoudrer, granulats dispersifiable dans l'eau, formulations ULV, microcapsules et cires.

8. Procédé pour la lutte contre des plantes indésirables, caractérisé en ce que l'on applique sur celles-ci ou sur les superficies cultivables de celles-ci une quantité herbicidement active d'un agent d'après une ou plusieures des revendications 1 à 6.

9. Procédé d'après la revendication 8, caractérisé en ce que l'on lutte sélectivement contre de mauvaises herbes dans des cultures de plantes utiles.

**10.** Procédé d'après la revendication 9, caractérisé en ce que la culture de plantes utiles est choisie dans le groupe comportant blé, orge, seigle, riz et maïs.

**Revendications pour l'Etat contractant suivant : ES**

**1.** Utilisation d'agents herbicides pour la lutte contre de mauvaises herbes, caractérisée par une quantité synergiquement active

**A)** de composés de la formule générale (I) ou de ses sels

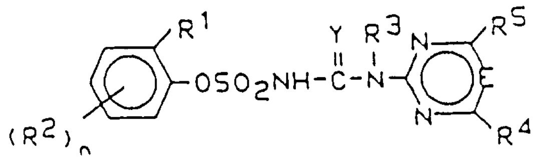

(I)

où

$a_1$)

$R^1$ est éthoxy, propoxy ou isopropoxy et

$R^2$ est halogène, $NO_2$, $CF_3$, CN, $C_1$-$C_4$-alkyle, $C_1$-$C_4$-alkoxy, $C_1$-$C_4$-alkylthio ou ($C_1$-$C_4$-alkoxy)carbonyle et

n est 0, 1, 2 ou 3, ou

$a_2$)

$R^1$ est, le cas échéant, $C_1$-$C_8$-alkoxy insaturé qui est substitué par l'halogène, est, le cas échéant, $C_1$-$C_6$-alkoxy insaturé, un radical de la formule choisie dans le groupe consistant en ($C_1$-$C_6$-alkyl)-S-, ($C_1$-$C_6$-alkyl)-SO-, ($C_1$-$C_6$-alkyl)-$SO_2$-, ($C_1$-$C_6$-alkyl)-O-CO-, $NO_2$, CN ou phényle; est de plus $C_2$-$C_8$-alcènyloxy oualcynyloxy et

$R^2$ est $C_1$-$C_8$-alkyle saturé ou insaturé, phényle, phénoxy, $C_1$-$C_4$-alkoxy, $C_1$-$C_4$-alkylthio, ($C_1$-$C_4$-alkoxy)carbonyle, dont tous les radicaux précités pour $R^2$ peuvent être substitués par halogène, $C_1$-$C_4$-alkoxy ou -alkylthio, ou par halogène, $NO_2$, $C_1$-$C_4$-alkylsulfonyle ou -sulfinyle, et

n est 0, 1, 2 ou 3, ou

$a_3$)

$R^1$ est $C_1$-$C_8$-alkoxy et

$R^2$ est $C_2$-$C_8$-alcènyle ou -alcynyle, phényle ou phénoxy, les radicaux dénommés pour $R^2$ sont insubstitués ou substitués par halogène, $C_1$-$C_4$-alkoxy ou alkylthio, ou est alkylsulfonyle ou -alkylsulfinyle, et

n est 1, 2 ou 3, ou

$a_4$)

$R^1$ est halogène, méthoxy, éthyle ou propyle, chacun en position 2 au radical phényle,

$R^2$ est ($C_1$-$C_4$-alkoxy)carbonyle en position 6 du radical phényle, et

n est 1;

aussi bien que dans tous les cas $a_1$) à $a_4$)

$R^3$ est hydrogène, $C_1$-$C_8$-alkyle saturé ou insaturé ou $C_1$-$C_4$-alkoxy,

$R^4$, $R^5$ sont, indépendemment l'un de l'autre, hydrogène, $C_1$-$C_4$-alkyle, $C_1$-$C_4$-alkoxy, $C_1$-$C_4$-alkylthio, les trois radicaux mentionnés en dernier lieu étant insubstitués ou substitués par halogène, $C_1$-$C_4$-alkoxy ou $C_1$-$C_4$-alkylthio,

Y est O ou S et

E est CH ou N,

en combinaison avec

**B**) un ou plusieurs composé(s) choisi(s) dans le groupe comportant les composés

B2) N-(éthylthio-carbonyl)-azépane

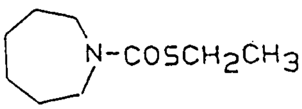

(B2)

B3) N,N-diéthylthiocarbamate de 4-chlorobenzyle

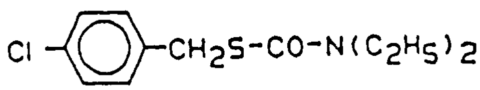

(B3) (B3)

et

B9) N-(2-phényl-prop-2-yl-thiocarbonyl)-pipéridine

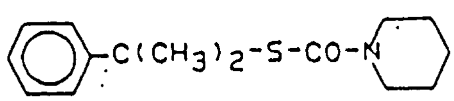

(B9)

**2.** Utilisation d'après la revendication 1, caractérisée en ce que les agents comportent des composés de la formule (I) ou des sels de celle-ci, où

$a_1$)

$R^1$ est éthoxy, propoxy, ou isopropoxy et

$R^2$ est orienté à la position 6 et a la signification sus-nommée, et

n est 0 ou 1, ou

$a_2$)

$R^1$ est, le cas échéant, $C_1$-$C_4$-alkoxy insaturé qui est substitué par halogène, $C_1$-$C_4$-alkoxy, $C_1$-$C_4$-alkylthio ou -sulfinyle ou -sulfonyle, ($C_1$-$C_4$-alkoxy)-carbonyle, $NO_2$, CN ou phényle; de plus est $C_2$-$C_5$-alcènyloxy ou $C_2$-$C_4$-alcynyloxy, et

$R^2$ est $C_1$-$C_4$-alkyle, $C_2$-$C_5$-alcènyle, ($C_1$-$C_4$-alkoxy)-carbonyle, $C_1$-$C_4$-alkoxy ou $C_1$-$C_4$-alkylthio qui, comme susmentionné, peuvent être substitués, ou est l'halogène, et

n est 0 ou 1, ou

$a_3$)

$R^1$ est méthoxy, éthyle ou propyle, et

$R^2$ est 6-méthoxycarbonyle ou 6-éthoxycarbonyle, et

n est 1,

aussi bien que dans tous les cas $a_1$) à $a_3$)

$R^3$ est hydrogène, $C_1$-$C_4$-alkyle,

$R^4$, $R^5$ sont hydrogène, $C_1$-$C_4$-alkyle, $C_1$-$C_4$-alkoxy ou $C_1$-$C_4$-alkylthio, les trois radicaux mentionnés en dernier lieu étant insubstitués ou substitués par halogène, $C_1$-$C_4$-alkoxy ou $C_1$-$C_4$-alkylthio,

Y est O ou S et

E est CH ou N.

3. Utilisation d'après la revendication 1 ou 2, caractérisée en ce que les agents comportent un ou plusieurs composés ayant les formules A1, A2 ou A3 ou des sels de celles-ci

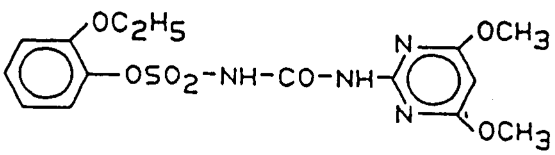

(A1)

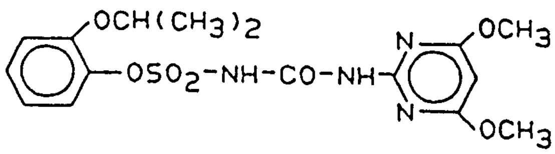

(A2)

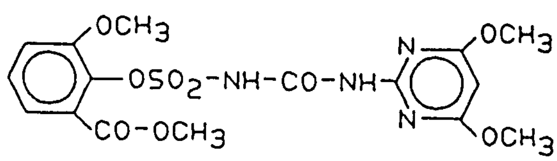

(A3)

4. Utilisation d'après une ou plusieures des revendications 1 à 3, caractérisée en ce que les agents ont un teneur additionnel en un ou plusieurs composé(s) choisi(s) dans le groupe comportant les composés

B1) acide 3,7-dichloroquinoline-8-carboxylique ou ses sels

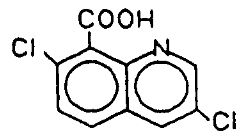

(B1)

B4) N-(2-butoxyéthyl)-2-chlor-N-(2,6-diéthylphényl)-acétamide,

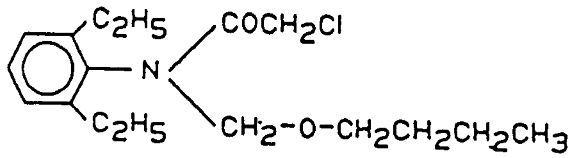

(B4)

B5) N-(2-propoxyéthyl)-2-chlor-N-(2,6-diéthylphényl)-acétamide,

B6) 3,5-bis(méthylthio-carbonyl)-2-difluorométhyl-4-(2-méthylpropyl)-6-trifluorométhylpyridine.

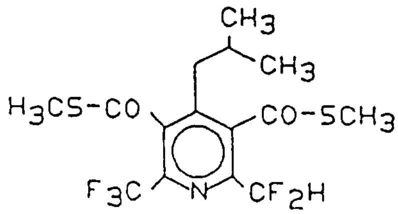

(B6)

B7) 2-(1,3-benzthiazol-2-yloxy)-N-méthyl-acetanilide,

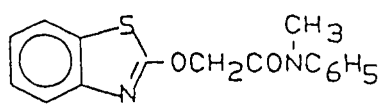

(B7)

B8) 2-[4-(6-chlor-benzoxazol-2-yloxy)-phénoxy]-propionate d'éthyle

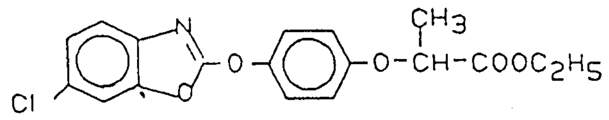

(B8)

et

B10) NTN-901 (herbicide).

**5.** Utilisation d'après une ou plusieures des revendications 1 à 4, caractérisée en ce que les agents contiennent 0,1 à 99 % en poids des matières actives A et B2, B3 et/ou B9 sans compter les moyens auxiliaires habituels de formulation.

**6.** Utilisation d'après une ou plusieures des revendications 1 à 5, caractérisée en ce que les agents contiennent les matières actives A et B2, B3 et/ou B9 en proportion de poids de 1:0,5 à 1:200.

**7.** Procédé pour la préparation d'un agent d'après une ou plusieures des revendications 1 à 6, caractérisés en ce que l'on exécute une formulation en formant une ou plusieurs composés A avec B2, B3 et/ou B9 par analogie avec une formulation habituelle de produits protectifs pour plantes, choisie dans le groupe contenant poudre mouillable, concentrés émulsifiables, solutions aqueuses, émulsions, solutions pulvérisables (tank-mix), dispersions sur la base d'huile ou d'eau, suspoémulsions, agents de poudrage, agents désinfectants, granulat à appliquer sur sol ou à saupoudrer, granulats dispersifiable dans l'eau, formulations ULV, microcapsules et cires.

**8.** Procédé pour la lutte contre des plantes indésirables, caractérisé en ce que l'on applique sur celles-ci ou sur les superficies cultivables de celles-ci une quantité herbicidement active d'un agent d'après une ou plusieures des revendications 1 à 6.

**9.** Procédé d'après la revendication 8, caractérisé en ce que l'on lutte sélectivement contre de mauvaises herbes dans des cultures de plantes utiles.

**10.** Procédé d'après la revendication 9, caractérisé en ce que la culture de plantes utiles est choisie dans le groupe comportant blé, orge, seigle, riz et maïs.